# EUROPEAN PATENT SPECIFICATION

(11) **EP 2 378 505 B1**
(45) Date of publication and mention of the grant of the patent: **25.03.2020**
(21) Application number: 09831919.7
(22) Date of filing: 09.12.2009
(51) Int. Cl.: G09F 13/14, B60K 35/00, G01D 11/28, G01D 13/04

(54) **INTERNALLY ILLUMINATED DISPLAY AND DISPLAY PANEL THEREFOR**
ANZEIGE MIT INNENBELEUCHTUNG UND ANZEIGETAFEL DAFÜR
PRÉSENTOIR ÉCLAIRÉ DE L'INTÉRIEUR ET PANNEAU DE PRÉSENTATION S'Y RAPPORTANT

(30) Priority: 12.12.2008 JP 2008316829
(43) Date of publication of application: 19.10.2011
(73) Proprietor: Furukawa Electric Co., Ltd., Chiyoda-ku Tokyo 100-8322 (JP)
(72) Inventor: NOMURA Shingo, Tokyo 100-8322 (JP); MIZOBUCHI Kensuke, Tokyo 100-8322 (JP); IKEDA Hideyuki, Tokyo 100-8322 (JP); KUMADA Kouji, Tokyo 100-8322 (JP); KATSURA Kouji, Tokyo 100-8322 (JP); SHIBATA Yoichi, Tokyo 100-8322 (JP); YOSHIDA Hideo, Tokyo 100-8322 (JP); SHIOZAKI Yoichiro, Tokyo 100-8322 (JP)
(74) Representative: Grünecker Patent- und Rechtsanwälte PartG mbB
(86) International application number: PCT/JP2009/070593
(87) International publication number: WO 2010/067815

(56) References cited:
- JP-A- 3 206 491
- JP-A- 6 508 304
- JP-A- 2000 148 051
- JP-A- 2003 022 701
- JP-A- 2003 029 673
- JP-A- 2004 101 778
- JP-A- 2008 270 144
- JP-A- 2008 270 144
- JP-B- 3 073 191

## Description

### TECHNICAL FIELD

The present invention relates to an internal lighting display device in which an opening section of a frame-shaped or a box-shaped housing is closed by a display panel having translucency and a light source is installed within the housing, and a display panel used in the internal lighting display device.

### BACKGROUND ART

In the past, an internal lighting signboard including a box-shaped housing with an open front surface, a display panel that closes the opening section of the box-shaped housing, and a light source installed within the box-shaped housing has been proposed (refer to, for example, Patent Literature 1). In the internal lighting signboard in

Patent Literature 1 , an elongated light source is provided within the box-shaped housing, and a display panel having translucency and used for advertisement is provided on the front side of the box-shaped housing. In the signboard in which the display panel is illuminated by the light from the light source, a reflective body is provided within the box-shaped housing.

Furthermore, in the past, an internal lighting vehicle display device has been proposed that includes a box-shaped housing with an open front surface, a display panel that closes the opening section of the box-shaped housing, and a light source installed in the box-shaped housing (refer to, for example, Patent Literature 2). The vehicle display device in Patent Literature 2 is erected in an instrument panel of a vehicle, and includes a display panel in which a design is formed for analog display in which indication is performed by an indicator needle that is rotated by movement. The display panel is formed by a dial that is integrated with a backlight.

### [Patent Literature]

Patent Literature 1: Japanese Patent Laid-open Publication No. 2000-148051
Patent Literature 2: Japanese Patent Laid-open Publication No. 2004-69514
JP 2008-271044 A relates to a light box having a plurality of spot light sources and a light reflector.
JP 2004 101778 A relates to an Andon information display device.

### DISCLOSURE OF INVENTION

### PROBLEM TO BE SOLVED BY THE INVENTION

In the display panel of the internal lighting signboard of Patent Literature 1, when a large amount of color having low transmittance is used as the color for forming the display panel, particularly when a color having low transmittance is used as a ground color, and text and designs for advertisement are displayed uncolored or using a color having high transmittance within the ground color, a problem occurs in that the light from the light source is absorbed by the area of the color having low transmittance, and the text and designs formed using the color having high transmittance become dark. In particular, in a two-sided signboard having a display panel on both sides, the text and designs become even darker because a reflective plate cannot be provided.

In addition, when the light source is reduced in adherence to the recent demands for energy conservation, the above-described tendency becomes more noticeable. In other words conventionally, as shown in Fig. 1 of Patent Literature 1, a straight-type fluorescent tube of almost the same length as the box-shaped housing in a longitudinal direction of the signboard is included as the light source. When the signboard is long, for example, a fluorescent tube of 40W and a fluorescent tube of 20W are installed continuously in the longitudinal direction. However, when the number of fluorescent tubes is reduced and an area in which the fluorescent tube is not present is present in both end sections in the longitudinal direction of the box-shaped housing, if a large amount of color having low transmittance is used in an area facing the area in which the fluorescent tube is not present in the display panel, a problem occurs in that the area becomes extremely dark.

In the display panel of the internal lighting vehicle display device of Patent Literature 2, when a large amount of color having low transmittance is used as the color for forming the display panel, particularly when a color having low transmittance is used as a ground color, and text and designs for display are displayed uncolored or using a color having high transmittance within the ground color, a problem occurs in that the light from the light source is absorbed by the area of the color having low transmittance, and the text and designs formed using the color having high transmittance become dark.

In addition, the internal lighting vehicle display device of Patent Literature 2 requires a large number of point-shaped light sources (light emitting diode [LED]) as the light source. However, when the number of point-shaped light sources is reduced, if a large amount of color having low transmittance is used in the areas facing the areas in which the point-shaped light sources are not present in the display panel, a problem occurs in that the areas become extremely dark.

Furthermore, in the internal lighting vehicle display device of Patent Literature 2, because a display panel that is integrated with a backlight is used, a problem occurs in that the display panel becomes heavy.

The present invention has been achieved in light of the above-described issues. An object of the present invention is to provide an internal lighting display device and a display panel thereof capable of effectively preventing a dark area from being formed in the display panel.

### MEANS FOR SOLVING PROBLEM

To achieve the above-described object, the present invention provides an interior lighting display device as defined in claim 1. Further advantageous embodiments are defined in the dependent claims 2 - 8.

In the interior lighting display devices according to the above claims, light is reflected by the film or sheet adhered to the back surface or the side surface of the display panel. Therefore, when the film or sheet is adhered to the back surface or the side surface of a colored area having low transmittance of the display panel, light is reflected without being absorbed by the area having low transmittance, reflected within the housing, and emitted from the area of a color having high transmittance. Therefore, text and designs displayed in color having high transmittance become bright. In addition, when the film or sheet is adhered to the back surface or the side surface of the area in which the light source is not present behind the display panel, because light is reflected by the film or sheet, the area in which the light source is not present within the housing becomes bright. Furthermore, in the interior lighting display devices (20) to (26), because light is reflected by the light reflective body placed in the area in which the light source is not present within the housing, the area in which the light source is not present box-shaped housing having an opening section on one surface, a display panel that closes the opening section of the box-shaped housing, and a light source installed within the box-shaped housing, in which a film or sheet that reflects light is disposed on a portion or an entirety of a back surface, a side surface, or both, of a display panel.
(12) The interior lighting display device (10) or (11) in which the interior lighting display device is an interior lighting signboard.
(13) The interior lighting display device (11) in which the interior lighting display device is a vehicle display device installed in front of a driver's seat of a vehicle, and the display panel is a display panel displaying vehicle information, such as speed of the vehicle, engine speed, and fuel capacity.
(14) The interior lighting display device (11) to (13) in which a film or sheet that reflects light is disposed on a portion or an entirety of a back surface opposing the display panel of the box-shaped housing.
(15) The interior lighting display device (10) to (14) in which the film or sheet that reflects light is disposed on a portion or an entirety of a back surface, a side surface, or both, of a colored area having low transmittance of the display panel.
(16) The interior lighting display device (10) to (15) in which the film or sheet that reflects light is disposed on a portion or an entirety of a back surface, a side surface, or both, of an area in which the light source is not present behind the display panel.
(17) The interior lighting display device (13) to (16) in which the film or sheet that reflects light is disposed on a portion or an entirety of a back surface, a side surface, or both, of an area in which the vehicle information is not displayed of the display panel.
(18) The interior lighting display device (10) to (17) in which the film or sheet that reflects light is a thermoplastic resin film or sheet having fine bubbles or pores therewithin with a mean bubble diameter of 50nm or more and 50µm or less.
(19) The interior lighting display device (10) to (17) in which the film or sheet that reflects light is a thermoplastic resin film or sheet containing fillers, and is a film or sheet in which numerous voids are formed with the fillers serving as cores.
(20) An interior lighting display device including a frame-shaped housing having an opening section on both surfaces , a display panel that closes both opening sections of the frame-shaped housing, and a light source installed within the frame-shaped housing, in which a light reflective body is disposed in an area in which the light source is not present within the frame-shaped housing.
(21) An interior lighting display device including a box-shaped housing having an opening section on one surface, a display panel that closes the opening section of the box-shaped housing, and a light source installed within the box-shaped housing, in which a light reflective body is disposed in an area in which the light source is not present within the box-shaped housing.
(22) The interior lighting display device (20) or (21) in which the light reflective body is peak-shaped, and has a tapered section that becomes closer to the display panel, the farther away from the light source the light reflective body is.
(23) The interior lighting display device (20) or (21) in which the light reflective body is peak-shaped, and has a curved surface that becomes closer to the display panel, the farther away from the light source the light reflective body is.
(24) The interior lighting display device (20) to (23) in which the light reflective body is formed by a film or sheet that reflects light.
(25) The interior lighting display device (24) in which the film or sheet that reflects light is a thermoplastic resin film or sheet having fine bubbles or pores therewithin with a mean bubble diameter of 50nm or more and 50µm or less.
(26) The interior lighting display device (24) in which the film or sheet that reflects light is a thermoplastic resin film or sheet containing fillers, and is a film or sheet in which numerous voids are formed with the fillers serving as cores.
(27) The interior lighting display device (20) to (26) in which the display panel is a display panel (1) to (9).

In the display panels (1) to (9) and the interior lighting display devices (10) to (19) and (27), light is reflected by the film or sheet adhered to the back surface or the side surface of the display panel. Therefore, when the film or sheet is adhered to the back surface or the side surface of a colored area having low transmittance of the display panel, light is reflected without being absorbed by the area having low transmittance, reflected within the housing, and emitted from the area of a color having high transmittance. Therefore, text and designs displayed in color having high transmittance become bright. In addition, when the film or sheet is adhered to the back surface or the side surface of the area in which the light source is not present behind the display panel, because light is reflected by the film or sheet, the area in which the light source is not present within the housing becomes bright. Furthermore, in the interior lighting display devices (20) to (26), because light is reflected by the light reflective body placed in the area in which the light source is not present within the housing, the area in which the light source is not present within the housing becomes bright.

Therefore, according to the present invention, as described above, a problem can be particularly effectively solved, the problem being, when fluorescent tubes are reduced and an area in which a fluorescent tube is not present is present in both end sections in a longitudinal direction of a housing in an interior lighting signboard, or when the number of point-shaped light sources are reduced and an area in which the point-shaped light source is not present is present within a housing in an interior lighting vehicle display device, if a large amount of color having low transmittance is used in an area facing an area in which the fluorescent tube or the point-shaped light source is not present of the display panel, the area becomes extremely dark.

### EFFECT OF THE INVENTION

In the internal lighting display device and the display panel of the present invention, a dark area can be effectively prevented from being formed in the display panel.

### BRIEF DESCRIPTION OF DRAWINGS

Fig. 1 is a schematic perspective view of an internal lighting signboard according to an embodiment of an internal lighting display device of the present invention;
Fig. 2 is a schematic front view of the internal lighting signboard in Fig. 1;
Fig. 3 is a schematic cross-sectional view of the internal lighting signboard in Fig. 1;
Fig. 4 is a partial rear view of a display panel used in the internal lighting signboard in Fig. 1;
Fig. 5 is a side view of an example of a reflective body;
Fig. 6 is a schematic front view of an internal lighting vehicle display device according to an embodiment of the internal lighting display device of the present invention;
Fig. 7 is a schematic cross-sectional view taken along line A-A in Fig. 6; and
Fig. 8 is a perspective view of a box composed of a film or a sheet that reflects light used to manufacture the internal lighting vehicle display device in Fig. 6.

### BEST MODE(S) FOR CARRYING OUT THE INVENTION

The present invention will hereinafter be described according to embodiments shown in the drawings. However, the present invention is not limited to the examples described below.

### (First Embodiment)

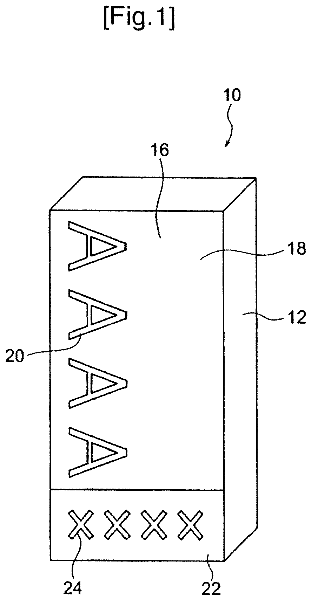

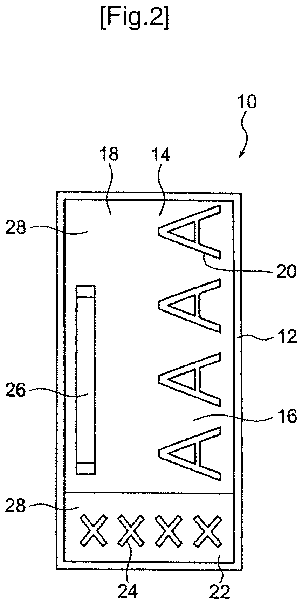

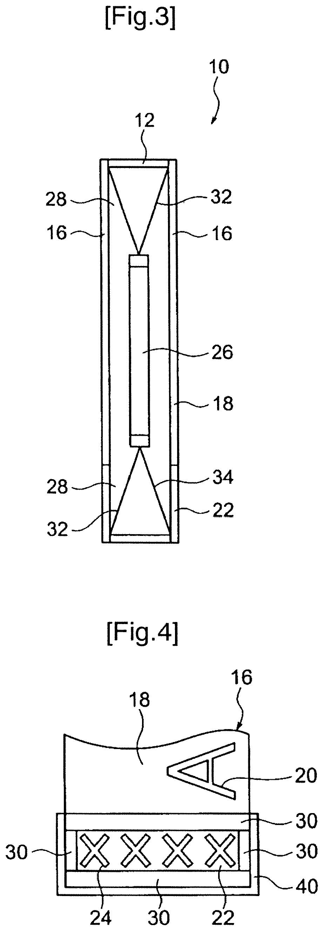

Fig. 1 to Fig. 3 show an internal lighting signboard according to an embodiment of an internal lighting display device of the present invention. Fig. 1 is a schematic perspective view. Fig. 2 is a schematic front view in a state in which a display panel and a light reflective body (both described hereafter) on a front surface side are omitted. Fig. 3 is a schematic cross-sectional view.

In an internal lighting signboard 10 according to the present embodiment, reference number 12 indicates a rectangular frame (frame-shaped housing) with an elongated cross-section, having an opening section 14 on both surfaces. The frame 12 is formed by a metal, such as aluminum, an aluminum alloy, or stainless steel.

Both opening sections 14 of the frame 12 are closed by a display panel 16. The display panel 16 is composed of a synthetic resin board having translucency, such as an acrylic resin, a flexible face (FF) sheet, or polycarbonate. In the present example, text (AAAA) 20 for advertisement is displayed in white in a region 18 that is roughly the upper four-fifths of the display panel 16. Areas other than the text 20 of the region 18 are colored blue. Text (XXXX) 24 for advertisement is displayed in white in a region 22 that is roughly the lower one-fifth of the display section 16. The areas other than the text 24 in the region 22 are colored dark brown. The above-described text and ground colors are formed by printing, such as silk-screen printing. The coloring method is not limited to printing and, for example, a sheet on which text or a design is formed may be adhered.

Within the frame 12, a straight-type fluorescent tube 26 is installed as a light source. In the present example, to reduce the light source, a single fluorescent tube 26 that is shorter than the vertical length of the frame 12 is disposed in an intermediate portion in a vertical direction of the frame 12. Therefore, an area 28 in which the fluorescent tube 26 is not present is present in both end sections in the vertical direction within the frame 12. In the present example, the fluorescent tube 26 is disposed on one end side in a horizontal direction of the frame 12. This is because, when the fluorescent tube is disposed in a center portion in the horizontal direction of the frame 12, a metal holding member (not shown) that holds the fluorescent tube causes the holding member side to become dark.

In the present example, the lower region 22 is colored a dark brown and is an area having low transmittance. Because the text 24 is displayed in the region 22 in white that is a color having high transmittance, the light from the fluorescent tube 26 is absorbed by the dark brown area, and the text 24 becomes dark. In particular, in the present example, because the area 28 in which the fluorescent tube 26 is not present is present in both end sections in the vertical direction within the frame 12, the text 24 becomes extremely dark.

Here, the area that is colored and has low transmittance refers to an area having a transmittance of 10% or lower. The transmittance takes into consideration the applied color and the material of the display panel 16. When a sheet on which text or a design is formed is disposed, the transmittance is that further taking into consideration the material of the sheet. When a film or a sheet that reflects light is adhered to an area having high transmittance, light is blocked by the film or sheet that reflects light, and the overall transmission of light decreases, causing dimming instead. Therefore, an area in which the film or sheet that reflects light is to be disposed should be decided within a range in which the overall transmission does not decrease.

Therefore, in the present example, as shown in Fig. 4, a film or sheet 30 that reflects light is adhered and disposed on a back surface of the dark brown area of the region 22 of the display panel 16. In the present example, although four strip-shaped films or sheets 30 that reflect light are adhered on the back surface of the dark brown area, this is not limited thereto. For example, a film or sheet 30 that reflects light from which the text 24 has been cut out may be adhered. In addition, in the present example, as shown in Fig. 3, a light reflective body 32 is disposed in the area 28 in which the fluorescent tube 26 is not present in both end sections in the vertical direction within the frame 12. The light reflective body 32 is peak-shaped (v-shaped cross-section) and has a tapered section 34 that becomes closer to the display panel 16, the farther away from the fluorescent tube 26 it is.

Therefore, in the present example, light is reflected by the films or sheets 30 that reflect light, and the light passes through the area of the white text 24. Thus, the text 24 becomes bright.

The materials of the film or sheet 30 that reflects light and the light reflective body 32 are not limited. However, the film or sheet 30 that reflects light and the light reflective body 32 are preferably formed by a thermoplastic resin film or sheet having fine bubbles or pores therewithin, a mean bubble diameter being 50nm or more and 50µm or less.

Examples of the material for the above-described thermoplastic resin film or sheet include general-purpose resins such as polyethylene, polypropylene, polystyrene, polyvinyl chloride, polychlorinated biphenyl, polyethylene terephthalate, and polyvinyl alcohol, engineering plastics such as polycarbonate, polybutylene terephthalate, polyethylene naphthalate, polyamide, polyacetal, polyphenylene ether, ultrahigh molecular weight polyethylene, polysulfone, polyethersulfone, polyphenylene sulfide, polyarylate, polyamide-imide, polyetherimide, polyether ether ketone, polyimide, polytetrafluoroethylene, liquid crystal polymer, and fluororesin, and copolymers or mixtures thereof. Among these, polyester, polyphenylene sulfide, polypropylene, and cyclopolyolefin are preferable because of favorable heat resistance, shock resistance, and the like. Additives, such as antioxidants, ultraviolet inhibitors, lubricants, pigments, and reinforcing agents, can be added accordingly to the thermoplastic resin. Furthermore, a coating layer containing such additives may be formed by coating.

More specifically, as an example of the thermoplastic resin film or sheet, a polyester foamed sheet (such as MCPET (registered trademark) manufactured by Furukawa Electric Co. , Ltd.) that has an interior bubble diameter of 50µm or less can be used, the sheet being a thermoplastic polyester extrusion sheet impregnated with carbon dioxide under high pressure, and subsequently heated and foamed. In addition, a cyclopolyolefin foamed sheet similarly having an internal bubble diameter of 50µm or less can be used.

Another preferred example of the material used to form the film or sheet 30 that reflects light and the light reflective body 32 is a thermoplastic resin film or sheet containing fillers. A film or sheet in which numerous voids are formed with the fillers serving as cores is given as an example. In this instance, in the film or sheet, the thermoplastic resin film or sheet containing the fillers is preferably a porous stretched film or sheet in which numerous voids are formed with the fillers serving as the cores by forming an un-stretched film or sheet containing the fillers and stretching the un-stretched film or sheet.

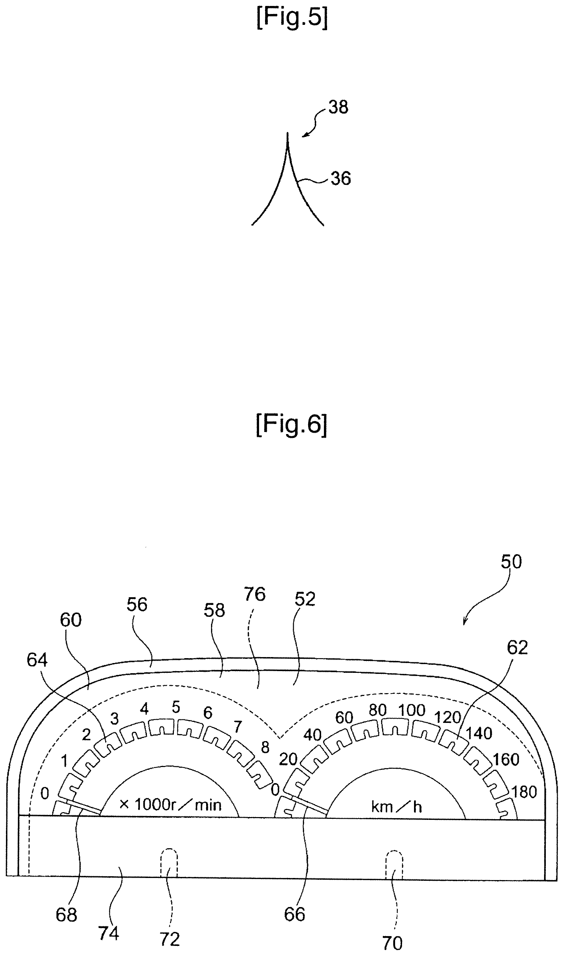

Various modifications, such as those in (a) to (d), below, are possible in the internal lighting signboard and display panel according to the present embodiment.
(a) The internal lighting signboard may include a box (box-shaped housing) having an opening section on one surface, a display panel that closes the opening section of the box, and a light source installed within the box.
(b) As shown in Fig. 4, a film or sheet 40 that reflects light may be adhered and disposed on a side surface of the display panel.
(c) As shown in Fig. 5, a light reflective body may be a peak-shaped light reflective body 38 having a curved surface 36 that becomes closer to the display panel, the farther away from the light source it is. In the light reflective body 38 having the curved surface 36, the text 24 becomes brighter than the light reflective body 32 shown in Fig. 3. However, the light reflective body shown in Fig. 3 is better in terms of facilitation of manufacturing. In addition, the light reflective body may be plate-shaped.
(d) The light reflective body may be provided only in a lower end section in the vertical direction within the frame, or in other words, on the side of the colored area that is the area having low transmittance.

### (Second Embodiment)

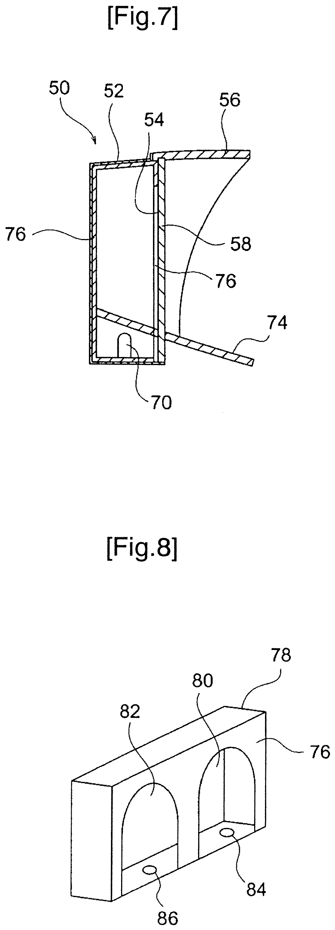

Fig. 6 and Fig. 7 show an internal lighting vehicle display device according to an embodiment of the internal lighting display device of the present invention. Fig. 6 is a schematic front view. Fig. 7 is a schematic cross-sectional view taken along line A-A in Fig. 6.

In a vehicle display device 50 according to the present embodiment, reference number 52 indicates a horizontally long, rectangular box (box-shaped housing) having an opening section 54 on one surface on a front surface side. The box 54 is formed by a synthetic resin. Reference number 56 in the drawings indicates a hood made of synthetic resin that is fixed to the box 52.

The opening section 54 of the box 52 is closed by a display panel 58. The display panel 58 is composed of a synthetic resin board having translucency, such as an acrylic resin, a flexible face (FF) sheet, or polycarbonate. In the present example, a speedometer 62for displaying the speed of an automobile (vehicle) and a tachometer 64 for displaying engine speed are displayed accordingly in color in a region 60 that is roughly the upper three-fifths. Areas of the region 60 other than the speedometer 62 and the tachometer 64 are transparent. Indicator needles 66 and 68 indicating the speed and engine speed are installed on the inner side of the display panel 58.

Two LEDs 70 and 72 are installed as point-shaped light sources within the box 52, near a movement (not shown) that rotates the indicator needles 66 and 68. The box 52 is provided with a front cover 74 for hiding the LEDs 70 and 72, and the above-described movement.

In the present example, a film or sheet 76 that reflects light is adhered and disposed on a back surface of an area in which the speedometer 62 and the tachometer 63 are not displayed in the region 60 of the display panel 58 (area in which vehicle information is not displayed), and a back surface opposing the display panel 58 of the box 52.

In this instance, in the present example, as shown in Fig. 8, after a rectangular-solid-shaped box 78 is formed by the film or sheet 76 that reflects light, notches 80 and 82 corresponding to the areas of the speedometer 62 and the tachometer 64 and LED insertion holes 84 and 86 are formed in the box 78. The front surface of the box 78 is then adhered to the back surface of the display panel 58. Therefore, in the present example, the film or sheet 76 that reflects light is disposed in the side surface sections, the top surface section, and the bottom surface section of the back surface of the box 52.

Therefore, in the present example, light is reflected by the film or sheet 76 that reflects light, and the light passes through the areas of the speedometer 62 and the tachometer 64. As a result, the areas of the speedometer 62 and the tachometer 64 become bright. In addition, in the present example, because the number of LEDs can be reduced, the demand for energy conservation can be addressed. Furthermore, in the present example, because a display panel that is integrated with a backlight is not required, weight reduction of the display panel and the vehicle display device can be achieved.

The material of the film or sheet 76 that reflects light is similar to that according to the first embodiment. Therefore, description thereof is omitted.

Various modifications, such as (e) and (f), below, are possible in the internal vehicle display device and the display panel according to the present embodiment.
(e) A film or sheet that reflects light may be disposed on a side surface of the display panel.
(f) A film or sheet that reflects light may be disposed only on the back surface of the display panel.

### EXPLANATION OF REFERENCE NUMBERS

- 10: interior lighting signboard
- 12: frame
- 14: opening section
- 16: display panel
- 20: text
- 24: text
- 26: fluorescent tube (light source)
- 28: area in which light source is not present
- 30: film or sheet that reflects light
- 32: light reflective body
- 34: tapered section
- 36: curved surface
- 38: light reflective body
- 40: film or sheet that reflects light
- 50: vehicle display device
- 52: box (box-shaped housing)
- 54: opening section
- 58: display panel
- 62: speedometer
- 64: tachometer
- 70 and 72: LED (light source)
- 76: film or sheet that reflects light

## Claims

1. An interior lighting display device comprising:
a frame-shaped housing (12) having an opening section (14) on both surfaces;
a display panel (16) that closes both opening sections (14) of the frame-shaped housing (12); and
a light source (26) installed within the frame-shaped housing (12), **characterized in that**
a film or sheet (30) that reflects light is disposed on a portion or an entirety of a back surface, a side surface, or both, of a colored area having low transmittance of the display panel (16),
a light reflective body (32, 38) is disposed in an area (28) in which the light source (26) is not present within the frame-shaped housing (12),
the light reflective body (32, 38) is peak-shaped and has a tapered section (34) or a curved surface (36) that becomes closer to the display panel (16), the farther the light reflective body (32, 38) is away from the light source (26), the light reflective body (32, 38) is formed by a film or sheet (40) that reflects light,
the film or sheet (30) that reflects light disposed on the portion or the entirety of the back surface, the side surface, or both, of the display panel and the film or sheet (40) that reflects light formed of the light reflective body is a thermoplastic resin film or sheet having fine bubbles or pores therewithin with a mean bubble diameter of 50nm or more and 50µm or less.

2. The interior lighting display device according to claim 1, wherein the interior lighting display device is an interior lighting signboard (10).

3. The interior lighting display device according to claim 1, wherein:
the interior lighting display device is a vehicle display device (50) installed in front of a driver's seat of a vehicle; and
the display panel (16) is a display panel displaying vehicle information, such as speed of the vehicle, engine speed, and fuel capacity.

4. The interior lighting display device according to any one of claims 1 to 3, wherein a film or sheet (76) that reflects light is disposed on a portion or an entirety of a back surface opposing the display panel (16) of the box-shaped housing (52).

5. The interior lighting display device according to any one of claims 1 to 4, wherein the film or sheet (76) that reflects light is disposed on a portion or an entirety of a back surface, a side surface, or both, of an area in which the light source (26) is not present behind the display panel (58).

6. The interior lighting display device according to any one of claims 3 to 5, wherein the film or sheet (76) that reflects light is disposed on a portion or an entirety of a back surface, a side surface, or both, of an area in which the vehicle information is not displayed of the display panel (58).

7. The interior lighting display device according to any one of claims 1 to 6, wherein the film or sheet that reflects light is a thermoplastic resin film or sheet containing fillers, and is a film or sheet in which numerous voids are formed with the fillers serving as cores.

## Patentansprüche

1. Anzeigevorrichtung mit Innenbeleuchtung, die umfasst:
ein rahmenförmiges Gehäuse (12), das einen Öffnungsabschnitt (14) an beiden Flächen aufweist;
ein Anzeigefeld (16), das beide Öffnungsabschnitte (14) des rahmenförmigen Gehäuses (12) verschließt; sowie
eine Lichtquelle (26), die im Inneren des rahmenförmigen Gehäuses (12) installiert ist, **dadurch gekennzeichnet, dass**
ein Film oder eine Folie (30), der/die Licht reflektiert, an einem Teil oder einer Gesamtheit einer hinteren Fläche oder/und einer seitlichen Fläche eines farbigen Bereiches des Anzeigefeldes (16) angeordnet ist, der geringe Durchlässigkeit aufweist,
ein lichtreflektierender Körper (32, 38) in einem Bereich (28) im Inneren des rahmenförmigen Gehäuses (12) angeordnet ist, in dem sich die Lichtquelle (26) nicht befindet,
der lichtreflektierende Körper (32, 38) spitz geformt ist und einen sich verjüngenden Abschnitt (34) oder eine gekrümmte Fläche (36) aufweist, die sich mit zunehmender Entfernung des lichtreflektierenden Körpers (32, 38) zu der Lichtquelle (26) dem Anzeigefeld (16) nähert, wobei der lichtreflektierende Körper (32, 38) durch einen Film oder eine Folie (40) gebildet wird, der/die Licht reflektiert,
der Film oder die Folie(30), der/die Licht reflektiert und an dem Teil oder der Gesamtheit der hinteren Fläche oder/und der seitlichen Fläche des Anzeigefeldes angeordnet ist, und der Film oder die Folie (40), der/die Licht reflektiert und aus dem lichtreflektierenden Körper besteht, ein Film oder eine Folie aus thermoplastischem Kunststoff ist, in dem sich feine Blasen oder Poren mit einem mittleren Blasendurchmesser von 50 nm oder mehr und 50µm oder weniger befinden.

2. Anzeigevorrichtung mit Innenbeleuchtung nach Anspruch 1, wobei die Anzeigevorrichtung mit Innenbeleuchtung ein Hinweisschild mit Innenbeleuchtung (10) ist.

3. Anzeigevorrichtung mit Innenbeleuchtung nach Anspruch 1, wobei:
die Anzeigevorrichtung mit Innenbeleuchtung eine Fahrzeug-Anzeigevorrichtung (50) ist, die vor einem Fahrersitz eines Fahrzeugs installiert ist; und
das Anzeigefeld (16) ein Anzeigefeld ist, das Fahrzeug-Informationen, wie z.B. Geschwindigkeit des Fahrzeugs, Motordrehzahl und Kraftstoffvorrat, anzeigt.

4. Anzeigevorrichtung mit Innenbeleuchtung nach einem der Ansprüche 1 bis 3, wobei ein Film oder eine Folie (76), der/die Licht reflektiert, an einem Teil oder einer Gesamtheit einer hinteren Fläche des kastenförmigen Gehäuses (52) angeordnet ist, die dem Anzeigefeld (16) gegenüberliegt.

5. Anzeigevorrichtung mit Innenbeleuchtung nach einem der Ansprüche 1 bis 4, wobei der Film oder die Folie (76), der/die das Licht reflektiert, an einem Teil oder einer Gesamtheit einer hinteren Fläche oder/und einer seitlichen Fläche eines Bereiches hinter dem Anzeigefeld (58) angeordnet ist, in dem sich die Lichtquelle (26) nicht befindet.

6. Anzeigevorrichtung mit Innenbeleuchtung nach einem der Ansprüche 3 bis 5, wobei der Film oder die Folie (76), der/die das Licht reflektiert, an einem Teil oder einer Gesamtheit einer hinteren Fläche oder/und einer seitlichen Fläche eines Bereiches des Anzeigefeldes (58) angeordnet ist, in dem die Fahrzeug-Informationen nicht angezeigt werden.

7. Anzeigevorrichtung mit Innenbeleuchtung nach einem der Ansprüche 1 bis 6, wobei der Film oder die Folie, der/die das Licht reflektiert, ein Film oder eine Folie aus thermoplastischem Kunststoff ist, der Füllstoffe enthält, und ein Film oder eine Folie ist, in dem/der zahlreiche Hohlräume ausgebildet sind, wobei die Füllstoffe als Kerne dienen.

## Revendications

1. Dispositif d'affichage lumineux intérieur comprenant :
un boîtier en forme de cadre (12) présentant une section d'ouverture (14) sur deux surfaces ;
un panneau de présentation (16) qui ferme les deux sections (14) du boîtier en forme de cadre (12) ; et
une source lumineuse (26) installée au sein du boîtier en forme de cadre (12), **caractérisé en ce que**
un film ou feuille (30) qui reflète une lumière est disposé sur une partie ou une intégralité d'une surface de fond, une surface latérale, ou les deux, d'une zone colorée présentant une faible transmission du panneau de présentation (16),
un corps réfléchissant la lumière (32, 38) est installé dans une zone (28) dans laquelle la source lumineuse (26) n'est pas présente au sein du boîtier en forme de cadre (12),
le corps réfléchissant la lumière (32, 38) est de forme pointue et présente une section effilée (34) ou une surface incurvée (36) qui se rapproche du panneau de présentation (16), plus le corps réfléchissant la lumière (32, 38) s'éloigne de la source lumineuse (26), le corps réfléchissant la lumière (32, 38) est constitué d'un film ou feuille (40) qui reflète la lumière,
le film ou feuille (30) qui reflète la lumière disposé sur la partie ou l'intégralité de la surface de fond, la surface latérale, ou les deux, du panneau de présentation et le film ou feuille (40) qui reflète la lumière formée par le corps réfléchissant la lumière est un film ou feuille de résine thermoplastique présentant de fins pores ou bulles en son sein d'un diamètre de bulle moyen de 50 nm ou plus et 50 µm ou moins.

2. Le dispositif d'affichage à éclairage intérieur selon la revendication 1, dans lequel le dispositif d'affichage à éclairage intérieur est un panneau indicateur à éclairage intérieur (10).

3. Le dispositif d'affichage à éclairage intérieur selon la revendication 1, dans lequel :
le dispositif d'affichage à éclairage intérieur est un dispositif d'affichage de véhicule (50) installé devant un siège d'un conducteur d'un véhicule ; et
le panneau de présentation (16) est un panneau de présentation affichant des informations sur le véhicule, telles qu'une vitesse du véhicule, un régime de moteur, et une capacité de carburant.

4. Le dispositif d'affichage à éclairage intérieur selon l'une quelconque des revendications 1 à 3, dans lequel un film ou feuille (76) qui reflète la lumière est installé sur une partie ou une intégralité d'une surface de fond opposée au panneau de présentation (16) du boîtier en forme de cadre (52).

5. Le dispositif d'affichage à éclairage intérieur selon l'une quelconque des revendications 1 à 4, dans lequel un film ou feuille (76) qui reflète la lumière est installé sur une partie ou une intégralité d'une surface de fond, une surface latérale, ou les deux, d'une zone dans laquelle la source lumineuse (26) n'est pas présente derrière le panneau de présentation (58).

6. Le dispositif d'affichage à éclairage intérieur selon l'une quelconque des revendications 3 à 5, dans lequel un film ou feuille (76) qui reflète la lumière est installé sur une partie ou une intégralité d'une surface de fond, une surface latérale, ou les deux, d'une zone dans laquelle les informations sur le véhicule ne s'affichent pas sur le panneau de présentation (58).

7. Le dispositif d'affichage à éclairage intérieur selon l'une quelconque des revendications 1 à 6, dans lequel le film ou feuille qui reflète la lumière est un film ou feuille en résine thermoplastique contenant des matières de remplissage, et est un film ou feuille dans lequel de nombreuses cavités sont constituées avec les matières de remplissage servant de noyaux.
